# EUROPEAN PATENT APPLICATION

(11) **EP 4 788 028 A1**
(43) Date of publication of application: **05.08.2026**
(21) Application number: 24884681.8
(22) Date of filing: 28.10.2024
(51) Int. Cl.: H04W 72/40, H04W 72/12

(54) **COMMUNICATION METHOD AND COMMUNICATION APPARATUS**

(30) Priority: 03.11.2023 CN 202311468893
(71) Applicant: HUAWEI TECHNOLOGIES CO., LTD., Shenzhen 518129 (CN)
(72) Inventor: XIA, Jinhuan, Shenzhen, Guangdong 518129 (CN)
(74) Representative: Goddar, Heinz J.
(86) International application number: PCT/CN2024/127891
(87) International publication number: WO 2025/092678

(57) **Abstract**

This application provides a communication method and a communication apparatus. The method includes: determining a channel/signal with a higher priority from an uplink channel/signal and a sidelink channel/signal, where the sidelink channel is a physical sidelink control channel PSCCH for scheduling a sidelink positioning reference signal SL-PRS, and the sidelink signal is the SL-PRS; and sending or receiving the channel/signal with the higher priority. The determining the channel/signal with the higher priority from the uplink channel/signal and the sidelink channel/signal includes: determining the uplink channel/signal as the channel/signal with the higher priority; or obtaining a priority value of the uplink channel/signal and a priority value of the sidelink channel/signal, and determining the channel/signal with the higher priority based on the priority value of the uplink channel/signal and the priority value of the sidelink channel/signal. According to the method, a problem of a conflict between sidelink channel/signal transmission and uplink channel/signal transmission can be resolved, thereby improving overall communication efficiency.

## Description

### CROSS-REFERENCE TO RELATED APPLICATIONS

This application claims priority to Chinese Patent Application No. 202311468893.8, filed with the China National Intellectual Property Administration on November 3, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Terminal devices may perform uplink communication with network devices over uplink, and perform sidelink communication with other terminal devices over sidelink (sidelink, SL). In current sidelink communication scenarios, a basic condition for sidelink positioning is that terminal devices need to perform sidelink positioning reference signal (sidelink positioning reference signal, SL-PRS) related communication (for example, send or receive SL-PRSs). However, currently, there is no related solution for how to handle when a conflict (for example, time overlapping) occurs between SL-PRS related communication to be performed by the terminal device and uplink communication to be performed by the terminal device.

### SUMMARY

This application provides a communication method and a communication apparatus, to resolve a problem of a conflict between an SL-PRS related communication process and an uplink communication process, thereby improving overall communication efficiency.

According to a first aspect, an embodiment of this application provides a communication method. The method may be performed by a terminal device, or may be performed by a component (for example, a processor, a chip, or a chip system) of the terminal device. The method includes: determining a channel/signal with a higher priority from an uplink channel/signal and a sidelink channel/signal, where the sidelink channel is a physical sidelink control channel PSCCH for scheduling a sidelink positioning reference signal SL-PRS, and the sidelink signal is the SL-PRS; and sending or receiving the channel/signal with the higher priority. The determining the channel/signal with the higher priority from the uplink channel/signal and the sidelink channel/signal includes: determining the uplink channel/signal as the channel/signal with the higher priority; or obtaining a priority value of the uplink channel/signal and a priority value of the sidelink channel/signal, and determining the channel/signal with the higher priority based on the priority value of the uplink channel/signal and the priority value of the sidelink channel/signal.

In the method, the terminal device performs prioritization between the uplink channel/signal and the sidelink channel/signal, and send or receive the sidelink channel/signal with the higher priority, so that communication quality and efficiency of communication performed based on the channel/signal with the higher priority can be ensured. Particularly, when a conflict exists between sending or receiving of the uplink channel/signal and sending or receiving of the sidelink channel/signal, a problem like a failure in or impact on uplink communication and sidelink communication caused by the conflict can be reduced or avoided, thereby improving overall communication efficiency and communication quality of the terminal device. When the method is applied to a scenario in which the terminal device performs uplink communication and SL-PRS related communication, a conflict between an SL-PRS related communication process and an uplink communication process of the terminal device can be avoided, thereby improving the overall communication efficiency and communication quality. In addition, the terminal device may perform prioritization between the uplink channel/signal and the sidelink channel/signal in different manners, so that flexibility and practicability are high.

In a possible design, the determining the channel/signal with the higher priority based on the priority value of the uplink channel/signal and the priority value of the sidelink channel/signal includes: using a channel/signal with a smaller priority value in the uplink channel/signal and the sidelink channel/signal as the channel/signal with the higher priority; when the priority value of the uplink channel/signal is equal to the priority value of the sidelink channel/signal, using the uplink channel/signal as the channel/signal with the higher priority; when the priority value of the uplink channel/signal is a first specified value, determining the channel/signal with the higher priority based on a specified priority threshold and the priority value of the sidelink channel/signal; or when the priority value of the uplink channel/signal is a second specified value and no specified priority threshold exists, determining the uplink channel/signal as the channel/signal with the higher priority.

In the method, the terminal device may perform prioritization between the uplink channel/signal and the sidelink channel/signal in a plurality of manners based on the priority value of the uplink channel/signal and the priority value of the sidelink channel/signal, so that flexibility and practicability are high, a prioritization process is simple and fast, and efficiency is high.

In a possible design, when the priority value of the uplink channel/signal is the first specified value, the determining the channel/signal with the higher priority based on the priority threshold and the priority value of the sidelink channel/signal includes: when the priority value of the sidelink channel/signal is smaller than the priority threshold, determining the sidelink channel/signal as the channel/signal with the higher priority; or when the priority value of the sidelink channel/signal is greater than the priority threshold, determining the uplink channel/signal as the channel/signal with the higher priority.

In the method, the terminal device performs prioritization between the sidelink channel/signal and the uplink channel/signal based on the priority value of the sidelink channel/signal and the specified priority threshold, so that a prioritization process is simple, and efficiency is high.

In a possible design, the priority threshold is a priority threshold configured for a dedicated resource pool of the sidelink channel/signal; a largest value among priority thresholds configured for communication resource pools; a largest value among priority thresholds configured for shared resource pools; or a largest value among priority thresholds configured for communication resource pools and priority thresholds configured for shared resource pools.

In this manner, the specified priority threshold is set to a priority threshold corresponding to a resource pool like the dedicated resource pool, the communication resource pool, or the shared resource pool, so that a sidelink channel/signal sending or receiving opportunity can be increased, thereby increasing a success rate of sidelink communication.

In a possible design, the first specified value is 0 or 1, and the second specified value is 1. According to the foregoing method, for different values of the priority value of the uplink channel/signal, the terminal device may perform prioritization between the uplink channel/signal and the sidelink channel/signal in different manners. In other words, the terminal device can perform prioritization with reference to a specific scenario. Therefore, the foregoing method has high practicability.

In a possible design, the priority threshold is indicated by a network device, or the priority threshold is preconfigured in the terminal device. In the method, the terminal device may obtain the priority threshold in different manners, so that flexibility and practicability are high.

In a possible design, the uplink channel/signal includes at least one of the following: a physical uplink control channel PUCCH channel/signal carrying sidelink hybrid automatic repeat request-acknowledgement SL HARQ-ACK information; an uplink channel/signal other than an uplink channel/signal of a specified type; and a PUCCH channel/signal carrying SL-PRS acknowledgement/negative acknowledgement ACK/NACK information.

In a possible design, the SL HARQ-ACK information is received by the terminal device on a physical sidelink feedback channel PSFCH; or the SL HARQ-ACK information is negative acknowledgement NACK information by default, and the terminal device receives no SL HARQ-ACK information on a PSFCH.

According to the foregoing method, the terminal device may perform prioritization in a corresponding specific manner for the uplink channel/signal of the specified type. Therefore, the solution has high practicability.

In a possible design, before determining the uplink channel/signal as the channel/signal with the higher priority, the method further includes: determining the uplink channel/signal as a PUCCH channel/signal carrying SL HARQ-ACK information; or determining the uplink channel/signal as a channel/signal of a specified type. In the method, a priority of the specified uplink channel/signal is always higher than a priority of the sidelink channel/signal, so that communication quality of the specified uplink channel/signal can be ensured.

In a possible design, the uplink channel/signal of the specified type includes at least one of the following: an uplink physical random access channel PRACH channel/signal; a physical uplink shared channel PUSCH scheduled by using a random access response RAR and a subsequently retransmitted channel/signal; a PUSCH in a type-2 random access procedure and a subsequently retransmitted channel/signal; a PUCCH channel/signal of a hybrid automatic repeat request-acknowledgement HARQ-ACK message for acknowledging a success RAR; and a PUCCH channel/signal scheduled by using downlink control information DCI. Optionally, cyclic redundancy check CRC in the DCI is scrambled by using a temporary cell radio network temporary identifier TC-RNTI.

The uplink channel/signal of the specified type is a channel/signal with higher importance. A priority of the uplink channel/signal of this type is always set to be higher than a priority of the sidelink channel/signal, so that communication quality of the uplink channel/signal of this type can be always ensured, and corresponding communication experience is not affected.

In a possible design, determining the priority value of the uplink channel/signal includes: when the uplink channel/signal is a PUCCH channel/signal carrying SL-PRS ACK/NACK information, determining the priority value of the uplink channel/signal as: a priority value of an SL-PRS corresponding to the ACK/NACK information; a largest value among priority values configured for configured grant CG resources, where the configured grant resource is used to carry the sidelink signal; or a largest value among priority values indicated by sidelink control information SCI carried by a PSCCH sent on a resource scheduled by using DCI, where the DCI is used to schedule the resource carrying the sidelink signal.

In the foregoing method, the terminal device may determine, based on a determined priority value of a channel/signal, a priority value of a to-be-sent channel/signal associated with the channel/signal, so that a manner of determining the priority value of the channel/signal can be further extended, and practicability is high.

In a possible design, before determining the priority value of the uplink channel/signal as the largest value among the priority values configured for the configured grant CG resources or the largest value among the priority values indicated by the sidelink control information SCI carried by the PSCCH sent on the resource scheduled by using the DCI, the method further includes: determining that no SL-PRS or PSCCH is sent. Optionally, the determining that no SL-PRS is sent is specifically: determining that the SL-PRS corresponding to the ACK/NACK information is not sent.

In a possible design, determining the priority value of the uplink channel/signal includes: when the uplink channel/signal includes SL-PRS ACK/NACK information and SL HARQ-ACK information, and the SL-PRS ACK/NACK information and the SL HARQ-ACK information are carried on a PUCCH, using a larger one of a priority value of the SL-PRS ACK/NACK information and a priority value of the SL HARQ-ACK information as the priority value of the uplink channel/signal.

In the method, the terminal device may determine a priority value of a multiplexed channel based on a priority value of information carried on the multiplexed channel. This facilitates prioritization between the multiplexed channel and another channel.

In a possible design, obtaining the priority value of the sidelink channel/signal includes: obtaining a priority value indicated by sidelink control information SCI, where the SCI is used to schedule, in the dedicated resource pool, a resource carrying the sidelink signal; and using, as the priority value of the sidelink channel/signal, the priority value indicated by the SCI.

In the method, the SCI used to schedule the sidelink signal resource indicates the priority value of the sidelink channel/signal, so that the priority value of the scheduled sidelink channel/signal can be indicated while the sidelink signal resource is scheduled. In this case, the priority value of the sidelink channel/signal can be indicated conveniently and quickly, thereby helping improve communication efficiency.

In a possible design, the sidelink channel/signal is carried in the dedicated resource pool.

In a possible design, the uplink channel/signal and the sidelink channel/signal meet the following condition: transmission of the uplink channel/signal and transmission of the sidelink channel/signal overlap in time; total power for transmission of the uplink channel/signal and transmission of the sidelink channel/signal is greater than total transmit power of the terminal device; or transmission of the uplink channel/signal and transmission of the sidelink channel/signal overlap in time, and total power for transmission of the uplink channel/signal and transmission of the sidelink channel/signal is greater than total transmit power of the terminal device.

The foregoing scenario is a scenario in which a conflict occurs between uplink channel/signal transmission and sidelink channel/signal transmission. The foregoing method is performed in the foregoing scenario, so that effective transmission control can be implemented in the scenario in which the conflict occurs between uplink channel/signal transmission and sidelink channel/signal transmission, to avoid a conflict problem, thereby improving overall communication quality and efficiency.

According to a second aspect, an embodiment of this application provides a communication apparatus, including a module configured to perform the first aspect or any method according to the first aspect.

According to a third aspect, an embodiment of this application provides a communication apparatus, including at least one processor. The at least one processor is configured to execute instructions stored in a memory, to cause the communication apparatus to perform the first aspect or any method according to the first aspect.

In a possible design, the communication apparatus further includes the memory, and the memory is configured to store the instructions.

According to a fourth aspect, an embodiment of this application provides a communication apparatus, including at least one processor, and a memory and a communication interface that are communicatively connected to the at least one processor.

The communication interface is configured to: receive a signal from a communication apparatus other than the communication apparatus and transmit the signal to the processor, or send a signal from the processor to a communication apparatus other than the communication apparatus.

The memory stores instructions executable by the at least one processor, and the at least one processor executes the instructions stored in the memory, to cause the communication apparatus to perform the first aspect or any method according to the first aspect.

In a possible design, the communication apparatus further includes a transceiver, and the at least one processor is configured to control the transceiver to receive and send signals. The transceiver may include a receiver and a transmitter. The receiver is configured to receive a signal, and the transmitter is configured to send a signal.

In a possible design, the communication apparatus may be a device or an apparatus with a chip, a device or an apparatus with an integrated circuit, or a chip, a chip system, a module, or a control unit in the foregoing terminal device or communication apparatus. This is not specifically limited in this application. It should be noted that the communication apparatus mentioned in this application may be the communication apparatus, or may be a chip, a functional module, an integrated circuit, or the like that is in the communication apparatus and that performs the method provided in this application. This is not specifically limited in this application.

According to a fifth aspect, this application provides a computer-readable storage medium. The computer-readable storage medium stores a computer program or instructions. When the computer program or the instructions are run on a communication apparatus, the communication apparatus is caused to perform the first aspect or any method according to the first aspect.

According to a sixth aspect, this application provides a computer program product. The computer program product includes a computer program or instructions. When the computer program or the instructions are executed by a communication apparatus, the first aspect or any method according to the first aspect is implemented.

According to a seventh aspect, this application provides a chip system. The chip system includes a processor, and the processor is configured to read and execute a software program stored in a memory, to implement the first aspect or any method according to the first aspect.

In a possible design, the chip system further includes the memory, and the processor is coupled to the memory through an interface.

For technical effects that can be achieved in any one of the second aspect to the seventh aspect, refer to descriptions of beneficial effects in the first aspect. Details are not described herein again.

### BRIEF DESCRIPTION OF DRAWINGS

FIG. 1 is a diagram of resource mapping of a sidelink;
FIG. 2 is a diagram of resource mapping of a sidelink;
FIG. 3 is a diagram of a communication scenario;
FIG. 4 is a diagram of a communication method according to an embodiment of this application;
FIG. 5 is a diagram of a communication apparatus according to an embodiment of this application; and
FIG. 6 is a diagram of a structure of a communication apparatus according to an embodiment of this application.

### DESCRIPTION OF EMBODIMENTS

The following describes in detail embodiments of this application with reference to accompanying drawings.

The method and the device are based on a same technical concept. Because the method and the device have similar principles for resolving the problem, for implementation of the device and the method, refer to each other. No repeated descriptions are provided.

In the following, some terms in this application are described, to help a person skilled in the art have a better understanding.
(1) A terminal device is a user-side entity configured to receive or transmit a signal, and has a wireless transceiver function. Optionally, the terminal device includes a device that provides data connectivity for a user. The terminal device may also be referred to as a terminal, user equipment (user equipment, UE), a mobile station (mobile station, MS), a mobile terminal (mobile terminal, MT), or the like.

For example, the terminal device may be a handheld device having a wireless connection function or a processing device connected to a wireless modem. The terminal device may exchange voice and/or data with a network device like a radio access network (radio access network, RAN) device. The terminal device may include a V2X terminal device, a wireless terminal device, a mobile terminal device, a device-to-device (device-to-device, D2D) terminal device, a machine-to-machine/machine type communication (machine-to-machine/machine type communication, M2M/MTC) terminal device, an internet of things (internet of things, IoT) terminal device, a virtual reality (virtual reality, VR) device, an augmented reality (augmented reality, AR) device, an industrial control (industrial control) device, a self-driving (self-driving) device, a remote medical (remote medical) device, a smart grid (smart grid) device, a smart home device, a smart office device, a smart transportation device, a mobile phone, a tablet computer, a computer with a wireless transceiver function, a vehicle, a helicopter, an aircraft, a ship, a robot arm, an uncrewed aerial vehicle, a robot, an access point (access point, AP), a remote terminal (remote terminal), an access terminal (access terminal), a user agent (user agent), a user device (user device), a wearable device, a vehicle-mounted device, and the like. A device form of the terminal device is not limited in embodiments of this application.

The terminal device may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, remote medical, a smart grid, smart furniture, a smart office, a smart wearable, smart transportation, and a smart city.

(2) A network device is a network-side entity configured to transmit and/or receive a signal, and may serve as a device that connects a terminal device to a wireless network in a communication system. As a node in a radio access network, the network device may also be referred to as a base station, or may be referred to as a radio access network (radio access network, RAN) device or a radio access network node.

For example, the radio access network device includes but is not limited to a base station, a base transceiver station (base transceiver station, BTS), a NodeB (NodeB), an evolved NodeB (evolved NodeB, eNodeB/eNB), a gNodeB/gNB, a transmission reception point (transmission reception point, TRP), a base station evolved after the 3rd generation partnership project (3rd generation partnership project, 3GPP), a radio network controller (radio network controller, RNC), an access point (access point, AP), a base station controller (base station controller, BSC), a home base station (for example, a home evolved NodeB or a home NodeB, HNB), a baseband unit (baseband unit, BBU), and an access node, a wireless relay node, a wireless backhaul node, and the like in a wireless fidelity (wireless fidelity, Wi-Fi) system. The base station may be a macro base station, a micro base station, a pico base station, a small cell, a relay station, any other radio access device, a base station in next-generation communication, or the like. A plurality of base stations may support networks using a same access technology, or may support networks using different access technologies. The base station may include one or more co-site or non-co-site transmission reception points. For example, the radio access network device may alternatively be a radio controller, a central unit (central unit, CU), and/or a distributed unit (distributed unit, DU) in a cloud radio access network (cloud radio access network, CRAN) scenario. Alternatively, the radio access network device may be a server or the like. For example, a network device in a vehicle-to-everything (vehicle-to-everything, V2X) technology may be a road side unit (road side unit, RSU).

(3) A communication device is a device that supports a wireless communication technology and that can communicate with another device. The communication device may also be referred to as a communication apparatus. In embodiments of this application, a specific representation form of the communication device is not limited. For example, the communication device may be a terminal device, a network device, or the like.

It should be noted that the term "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. "At least one" means one or more. In addition, it should be understood that in descriptions of this application, terms such as "first" and "second" are merely used for distinguishing and description, but should not be understood as indicating or implying relative importance, or should not be understood as indicating or implying a sequence.

Before embodiments of this application are described, a sidelink technology in embodiments of this application is first described.

In a wireless communication system, data communication may be performed between terminal devices via a network device, or communication between terminal devices may be directly performed without using a network device. An interface between the terminal devices is referred to as a direct communication (PC5) interface, and is similar to an air (Uu) interface between a terminal device and a base station. A link between the terminal devices is referred to as a sidelink (sidelink, SL). Data transmission may be directly performed between the terminal devices through the sidelink without using a network. Therefore, a communication latency can be effectively reduced.

The sidelink may support unicast communication, multicast communication, and broadcast communication. Unicast communication and multicast communication on the sidelink support hybrid automatic repeat request (hybrid automatic repeat request, HARQ) feedback. HARQ feedback may be performed on a physical sidelink feedback channel (physical sidelink feedback channel, PSFCH). In addition, the sidelink further supports enabled (enabled) HARQ feedback or disabled (disabled) HARQ feedback.

The terminal device may obtain a sidelink resource from the network device or preconfigured information. Specifically, the network device, for example, a RAN device, may schedule a sidelink resource for the terminal device by using downlink control information (downlink control information, DCI), or configure a sidelink configured grant (configured grant, CG) for the terminal device by using a radio resource control (radio resource control, RRC) message. Alternatively, the terminal device may receive a sidelink resource pool configuration from the network device, or obtain a sidelink resource pool configuration from a pre-configuration, and then select a sidelink resource from an obtained sidelink resource pool to send data.

In a possible scenario, a function of the network device may alternatively be implemented by a RAN node. For example, a plurality of RAN nodes may assist the terminal device in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (media access control/Medium Access Control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between the network elements in the ORAN system and protocol layer functions that may be implemented by the network elements, refer to Table 1.

**Table 1**

| ORAN network element | 3GPP protocol layer function |
|---|---|
| O-CU-CP | RRC+PDCP-C |
| O-CU-UP | SDAP+PDCP-U |
| O-DU | RLC+MAC+PHY-high |
| O-RU | PHY-low |

Frequency resources of the sidelink can be classified into a component carrier (component carrier, CC), a bandwidth part (bandwidth part, BWP), and a resource pool (resource pool, RP) based on a granularity. The component carrier is a frequency band allocated by a higher layer for sidelink, or may be considered as a frequency band of an unlicensed spectrum. The BWP is operating bandwidth that is of the terminal device and that is configured by a higher layer, and is also a bandwidth part actually used by the terminal device. In new radio (new radio) (which may also referred to as NR), one carrier includes one or more BWPs. All physical channels on the sidelink operate in a bandwidth range configured by using the BWP. One BWP may include one or more resource pools.

The sidelink has a plurality of physical channels, and specifically includes a physical sidelink broadcast channel (physical sidelink broadcast channel, PSBCH), a physical sidelink control channel (physical sidelink control channel, PSCCH), a physical sidelink shared channel (physical sidelink shared channel, PSSCH), and a physical sidelink feedback channel. The physical sidelink broadcast channel and a sidelink synchronization signal (sidelink synchronization signal, S-SS) block (S-SS/PSBCH block, S-SSB) are mainly used together to synchronize and broadcast a system message. Sidelink grant resources may be a group of physical sidelink control channel resources and a group of physical sidelink shared resources. The physical sidelink control channel resource carries control information related to the physical sidelink shared channel, and the physical sidelink shared channel resource carries data content of the sidelink. The physical sidelink shared channel and the physical sidelink control channel are configured at a granularity of a resource pool. Generally, one sidelink BWP includes a plurality of sidelink resource pools. The physical sidelink feedback channel is used to send HARQ feedback information, and the information is used to feed back whether a received signal is correctly decoded.

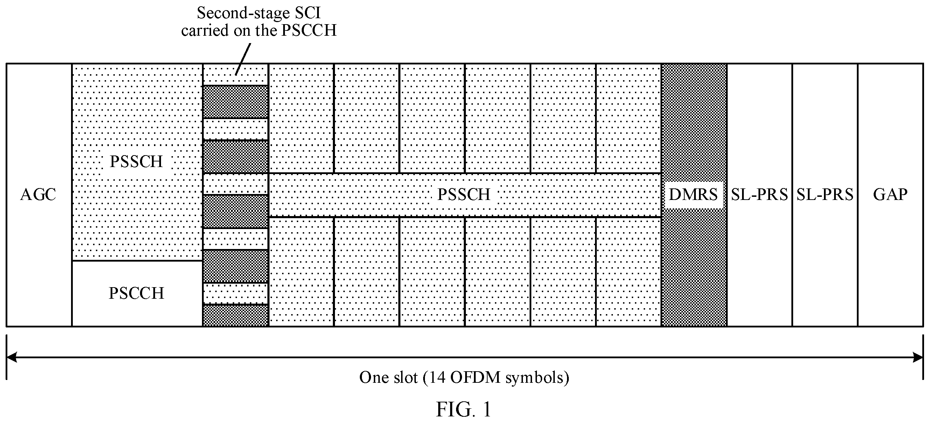

A sidelink positioning reference signal (sidelink positioning reference signal, PRS) may also be sent between the terminal devices through the sidelink, to implement sidelink-based positioning. A resource pool that can be used to send the physical sidelink shared channel and the sidelink positioning reference signal may be referred to as a shared resource pool. In other words, the terminal may send the physical sidelink shared channel and the sidelink positioning reference signal in the same resource pool (that is, the shared resource pool). For example, one slot includes 14 orthogonal frequency division multiplexing (orthogonal frequency division multiplexing, OFDM) symbols. A diagram of resource mapping of a physical sidelink control channel, a physical sidelink shared channel, a demodulation reference signal (demodulation reference signal, DMRS), and a sidelink positioning reference signal is shown in FIG. 1. The physical sidelink control channel carries first-stage sidelink control information (sidelink control information, SCI) SCI 1-A, and the SCI 1-A is used to schedule the physical sidelink shared channel and second-stage SCI carried on the physical sidelink shared channel. Both the first-stage SCI and the second-stage SCI are sidelink control information, and both include complete control information used to schedule a data channel, namely, the physical sidelink shared channel, and the sidelink positioning reference signal. The DMRS is a demodulation reference signal used to demodulate data.

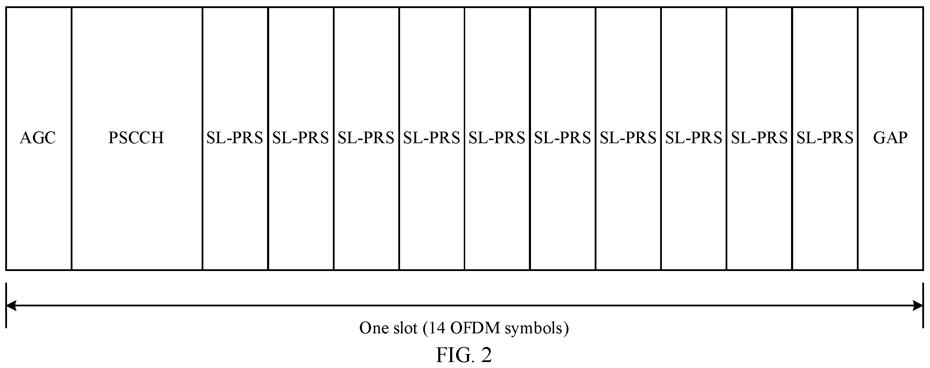

In addition, the sidelink positioning reference signal may alternatively be sent and received between terminal devices only in a dedicated resource pool. In the dedicated resource pool, that one slot includes 14 OFDM symbols is used as an example. A diagram of resource mapping of a physical sidelink control channel and a sidelink positioning reference signal is shown in FIG. 2. The physical sidelink control channel carries first-stage SCI information SCI 1-B, and the information is used to schedule sending of the sidelink positioning reference signal. The SCI 1-B and the SCI 1-A are SCI with different formats and functions. The first-stage SCI 1-B is sidelink control information, and includes complete control information used to schedule the sidelink positioning reference signal. In the sidelink, priorities of the physical sidelink control channel and the physical sidelink shared channel are indicated by a "priority (priority)" indicator in the first-stage SCI 1-A. The indicator is 3 bits. When a value of the indicator is "000", a corresponding priority value is 1; or when a value of the indicator is "001", a corresponding priority value is 2. The rest can be deduced by analogy.

It should be noted that in embodiments of this application, the physical sidelink broadcast channel is abbreviated as PSBCH, the physical sidelink control channel is abbreviated as PSCCH, the physical sidelink shared channel is abbreviated as PSSCH, and the physical sidelink feedback channel is abbreviated as PSFCH. Certainly, all the channels may alternatively use other names (for example, other names used in related communication standards). This is not specifically limited in embodiments of this application.

For ease of description, in the following embodiments, sidelink is referred to as SL for short, the physical sidelink broadcast channel is abbreviated as PSBCH, the physical sidelink control channel is abbreviated as PSCCH, the physical sidelink shared channel is abbreviated as PSSCH, the physical sidelink feedback channel is abbreviated as PSFCH, and the sidelink positioning reference signal is abbreviated as SL-PRS signal, SL-PRS, or SL PRS. In the following embodiments, SL may be replaced with sidelink, PSBCH may be replaced with physical sidelink broadcast channel, PSCCH may be replaced with physical sidelink control channel, PSSCH may be replaced with physical sidelink shared channel, PSFCH may be replaced with physical sidelink feedback channel, and SL-PRS signal, SL-PRS, or SL PRS may be replaced with sidelink positioning reference signal. It may be understood that a change of a channel name does not constitute any limitation on this application.

Currently, a terminal device may perform data communication with another terminal device through the foregoing sidelink, or may perform data communication with the network device through an uplink (uplink, UL). On one carrier or two respective carriers, if the terminal device does not have a capability of simultaneously sending the UL and the SL (including the PSCCH and the PSSCH), when the terminal device needs to simultaneously send the UL and the SL, the terminal device only sends one that is of the UL and the SL and that has a higher priority. On one carrier or two respective carriers, if the terminal device does not have a capability of simultaneously sending the UL and receiving the SL, when the terminal device needs to simultaneously send the UL and receive the SL, the terminal device only sends the UL with a higher priority or only receives the SL with a higher priority. If the terminal has a capability of sending the UL and the SL on two respective carriers, when the terminal needs to simultaneously send the UL and the SL on the two respective carriers, UL transmission and SL transmission overlap in a period of time, and total power for simultaneously sending the UL and the SL in the period of time exceeds total transmit power of the terminal device: if the SL has a higher priority, the terminal device reduces, before sending the UL, transmit power for sending the UL, so that the total transmit power for simultaneously sending the UL and the SL does not exceed the total transmit power of the terminal device; or if the UL has a higher priority, the terminal device reduces, before sending the SL, transmit power for sending the SL, so that the total transmit power for simultaneously sending the UL and the SL does not exceed the total transmit power of the terminal device.

Currently, the terminal device may determine a priority relationship between the UL and the SL according to at least one of the following methods 1 to 3.

Method 1: It is considered that a priority of UL transmission is higher than a priority of SL transmission or reception, when UL transmission is physical random access channel (physical random access channel, PRACH) transmission; physical uplink shared channel (physical uplink shared channel, PUSCH) transmission scheduled by using a random access response (random access response, RAR) and subsequent corresponding retransmission; PUSCH transmission in a type-2 random access procedure and corresponding subsequent retransmission; physical uplink control channel (physical uplink control channel, PUCCH) transmission with hybrid automatic repeat request-acknowledgement (hybrid automatic repeat request-acknowledgement, HARQ-ACK) information corresponding to successRAR (successRAR); or PUCCH transmission indicated by a DCI format 1_0 with cyclic redundancy check (cyclic redundancy check, CRC) scrambled by using a temporary cell radio network temporary identifier (temporary cell radio network temporary identifier, TC-RNTI).

Method 2: To perform prioritization between UL (including PUSCH and PUCCH) transmission other than UL transmission in the method 1 and the SL, when priority values corresponding to the PUSCH and the PUCCH are 1, if the terminal device configures a corresponding SL priority threshold with respect to UL, when a priority value of SL transmission/reception is smaller than the threshold, SL transmission/reception has a higher priority; otherwise, UL transmission has a higher priority. If the terminal device does not configure a corresponding SL priority threshold with respect to UL, UL transmission always has a higher priority than SL transmission/reception. When priority values corresponding to the PUSCH and the PUCCH are 0, if a priority value of SL transmission/reception is smaller than another configured threshold, that is, a corresponding SL priority threshold, SL transmission/reception has a higher priority; otherwise, UL transmission has a higher priority.

Method 3: If a priority value of PUCCH transmission with an SL HARQ-ACK information report is smaller than a priority value of SL transmission, PUCCH transmission with an SL HARQ-ACK information report has a higher priority; or if a priority value of PUCCH transmission is greater than a priority value of SL transmission, SL transmission has a higher priority.

A method for determining a priority of PUCCH transmission with an SL HARQ-ACK information report includes:
(1) If the terminal device receives, after sending a PSSCH, a PSFCH on a resource corresponding to the PSFCH, a priority value of the SL HARQ-ACK is the same as a priority value of PSSCH transmission.
(2) If the base station schedules or configures a grant resource by using DCI 3_0, and grants the terminal device to send a PSSCH channel, but the terminal device receives no PSFCH on any associated PSFCH resource, the terminal device feeds back NACK on the PUCCH, and a priority value of NACK feedback is the same as a priority value of PSSCH channel transmission.
(3) If the base station schedules or configures a grant resource by using DCI 3_0, and grants the terminal device to send a PSSCH channel, but the terminal device sends no PSSCH channel on any resource, the terminal feeds back negative acknowledgement (negative Acknowledgement, NACK) on the PUCCH, and a priority value of NACK feedback is the same as a priority value of the PSSCH channel that is not actually sent.
(4) If the base station configures grant resources for SL communication, but the terminal device sends no PSCCH channel, the terminal feeds back acknowledgement (acknowledgement, ACK) on the PUCCH, and a priority value of ACK feedback is a largest value among priority values corresponding to all the configured grant resources.
(5) If the base station schedules a resource for SL communication by using DCI 3_0, but the terminal device sends no PSCCH channel, the terminal device feeds back ACK on the PUCCH, and a priority value of ACK feedback is a largest value in all possible priority values of an SL sent on the resource scheduled by using the DCI 3_0.
   A radio access network device may schedule, by using the DCI 3_0, the resource for sending the SL by the terminal device. Before sending the SL on the resource scheduled by using the DCI 3_0, the terminal device may first determine to send, on the resource, SCI carried on the PSCCH, and may indicate a priority value of the SL in the SCI. All the possible priority values of the SL sent on the resource scheduled by using the DCI 3_0 are all priority values that may be indicated in the to-be-sent SCI determined by the terminal device before the terminal device sends the SL on the resource scheduled by using the DCI 3_0.
(6) In one or more PSSCHs sent by the terminal device, if a corresponding SCI format indicates that SL HARQ-ACK feedback is in a disabled (disabled) state, the HARQ-ACK information fed back by the terminal device on the PUCCH is determined by a higher layer inside the terminal. A priority value of HARQ-ACK information feedback is the same as a priority value of PSSCH transmission.

The foregoing methods only provide solutions for determining prioritization between UL data transmission and SL (in other words, PSSCH and PSCCH) data transmission. Currently, after an SL-PRS related communication solution is introduced in SL, there is no related solution for how to handle when a conflict (for example, time overlapping) occurs between SL-PRS related communication to be performed by the terminal device and uplink communication to be performed by the terminal device.

In view of this, embodiments of this application provide a communication method and apparatus. The method may be used to perform related sending processing when a conflict (for example, time overlapping) occurs between SL-PRS related communication to be performed by a terminal device and uplink communication to be performed by the terminal device, to resolve the conflict problem, thereby improving communication efficiency.

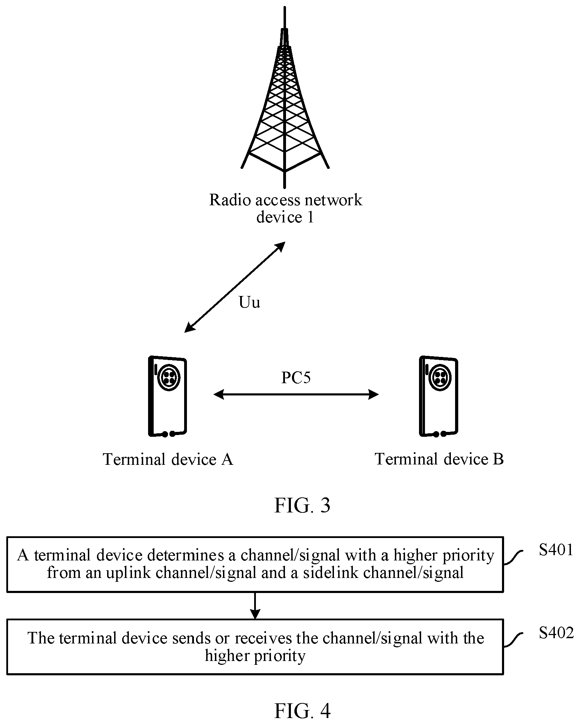

FIG. 3 shows a possible communication scenario to which a communication method provided in an embodiment of this application is applicable. As shown in FIG. 3, the communication scenario may be a sidelink communication and uplink communication scenario. The communication scenario may include a plurality of terminal devices (for example, a terminal device A and a terminal device B shown in FIG. 3). Optionally, the communication scenario may further include a radio access network device to which at least one of the plurality of terminal devices belongs (for example, a radio access network device to which the terminal device A shown in FIG. 3 belongs).

In the communication scenario shown in FIG. 3, the terminal device supports sidelink communication and uplink communication. For sidelink communication, refer to the descriptions in the foregoing embodiment. Details are not described herein again. Uplink communication is communication between the terminal device and the radio access network device. In this communication scenario, sidelink communication may be performed between terminal devices, and uplink communication may be performed between the terminal device and the radio access network device.

In the communication scenario shown in FIG. 3, the terminal device and the radio access network device may be connected through a Uu interface, to implement communication between the terminal device and the radio access network device (this communication may be referred to as Uu communication for short). Terminal devices may perform sidelink communication with each other through a PC5 interface.

In the communication scenario shown in FIG. 3, the terminal device A and the radio access network device may form a UL system, and the terminal device A and the terminal device B may form an SL system.

In the communication scenario shown in FIG. 3, SL communication performed between the terminal devices in the sidelink system may be SL-PRS related communication. For example, the terminal device A may serve as a transmitting side of SL positioning, and the terminal device B may be serve as a receiving side of SL positioning. The terminal device A may communicate with the terminal device B (for example, send an SL-PRS to the terminal device B) according to the method provided in embodiments of this application.

It should be noted that, the communication scenario shown in FIG. 3 is used as an example, and constitutes no limitation on the communication scenario to which the method provided in embodiments of this application is applicable. For example, communication technologies of various standards may be used between the terminal device and the radio access network device, for example, a 5th generation (5th Generation, 5G) communication technology (that is, an NR (new radio) technology), a 4G communication technology, a 6th generation (6th Generation, 6G) communication technology, and a communication technology evolved based on the foregoing technologies. In addition, the SL system is applicable to a 4G scenario, a 5G scenario (that is, an NR scenario), a 6G scenario, a scenario evolved based on the foregoing scenarios, and the like, and is further applicable to specific scenarios such as V2X, long term evolution-internet of vehicles (LTE-vehicle, LTE-V), V2V, internet of vehicles, machine type communication (Machine Type Communication, MTC), internet of things (internet of things, IoT), long term evolution-machine-to-machine (LTE-machine-to-machine, LTE-M), and machine-to-machine (M2M). This is not limited in this application.

With reference to FIG. 4, the following describes in detail the communication method provided in embodiments of this application. As shown in FIG. 4, a communication method provided in this embodiment of this application may include the following steps.

S401: A terminal device determines a channel/signal with a higher priority from an uplink channel/signal and a sidelink channel/signal.

The uplink channel/signal is an uplink channel or an uplink signal, or may be denoted as an uplink channel/uplink signal. The sidelink channel/signal is a sidelink channel or a sidelink signal, or may be denoted as a sidelink channel/sidelink signal.

The sidelink channel may be a PSCCH for scheduling an SL-PRS, and the sidelink signal may be the SL-PRS. The sidelink channel described in the following embodiments of this application is the PSCCH for scheduling the SL-PRS, and the sidelink signal described in the following embodiments of this application is the SL-PRS.

In some embodiments of this application, the sidelink channel/signal may be carried in a dedicated resource pool, or may be carried in a shared resource pool.

In some embodiments of this application, the terminal device may determine the channel/signal with the higher priority and/or a channel/signal with a lower priority in the uplink channel/signal and the sidelink channel/signal according to at least one of the following methods 1 to 4.

Method 1: The terminal device may determine the uplink channel/signal as the channel/signal with the higher priority, and determine the sidelink channel/signal as the channel/signal with the lower priority. In other words, a priority of the sidelink channel/signal is always lower than a priority of the uplink channel/signal, to ensure that the uplink channel/signal is preferentially sent, thereby preferentially ensuring uplink communication quality.

Method 2: When the uplink channel/signal is a PUCCH channel/signal carrying SL HARQ-ACK information, the terminal device may determine the uplink channel/signal as the channel/signal with the higher priority, and determine the sidelink channel/signal as the channel/signal with the lower priority. In other words, a priority of the sidelink channel/signal is always lower than a priority of the PUCCH channel/signal carrying the SL HARQ-ACK information, to ensure that the PUCCH channel/signal carrying the SL HARQ-ACK information is preferentially sent, thereby preferentially ensuring corresponding uplink communication quality.

Method 3: When the uplink channel/signal is a channel/signal of a specified type, the terminal device may determine the uplink channel/signal as the channel/signal with the higher priority, and determine the sidelink channel/signal as the channel/signal with the lower priority. In other words, a priority of the sidelink channel/signal is always lower than a priority of the uplink channel/signal of the specified type, to ensure that the uplink channel/signal of the specified type is preferentially sent, thereby preferentially ensuring corresponding uplink communication quality.

The uplink channel/signal of the specified type may include at least one of the following: an uplink PRACH channel/signal; a PUSCH scheduled by using a RAR and a subsequently retransmitted channel/signal; a PUSCH in a type-2 random access procedure and a subsequently retransmitted channel/signal; a PUCCH channel/signal carrying a HARQ-ACK message corresponding to successRAR (successRAR); and a PUCCH channel/signal scheduled by using DCI, where CRC in the DCI is scrambled by using a TC-RNTI. Optionally, the DCI may be DCI 1_0, that is, DCI in a format 1_0.

Method 4: The terminal device may first obtain a priority value of the uplink channel/signal and a priority value of the sidelink channel/signal, and then determine the channel/signal with the higher priority based on the priority value of the uplink channel/signal and the priority value of the sidelink channel/signal.

In some embodiments of this application, the terminal device may receive configuration information sent by a radio access network device. The configuration information may include information about a carrier used for SL communication; and information about a resource pool used by the terminal device on the carrier to send and/or receive an SL, or information about the dedicated resource pool used to send the sidelink channel/signal. When the sidelink channel/signal is allowed to be sent in the shared resource pool, the configuration information may further include sidelink channel/signal configuration information in the shared resource pool (for example, SL-PRS configuration information in the shared resource pool). In some embodiments of this application, when the terminal device is not within coverage of a radio access network device, the radio access network device cannot provide configuration information for the terminal device. In this case, the configuration information may be preconfigured in the terminal device.

In some embodiments of this application, for a method for determining the priority value of the uplink channel/signal, refer to a method defined in a related communication standard. Details are not described herein.

In some embodiments of this application, the uplink channel/signal may be a PUCCH channel/signal carrying SL-PRS acknowledgement/negative acknowledgement (acknowledgement/negative acknowledgement, ACK/NACK) information. In this scenario, the terminal device may determine, according to any one of the following methods, a priority value of the PUCCH carrying the SL-PRS ACK/NACK information:
(1) Determine the priority value of the PUCCH carrying the SL-PRS ACK/NACK information as a priority value of a sent SL-PRS. In other words, the terminal device may use a priority value of an SL-PRS sent last time as the priority value of the PUCCH carrying the SL-PRS ACK/NACK information.
   In this manner, after the terminal device sends the SL-PRS, a priority value of the SL-PRS ACK/NACK information is the same as the priority value of the sent SL-PRS.
(2) Determine the priority value of the PUCCH carrying the SL-PRS ACK/NACK information as a largest value among priority values configured for configured grant CG resources, where the configured grant resource is used to carry the sidelink channel/signal (that is, the SL-PRS).
   In an optional implementation, the terminal device may determine, based on the following steps, the priority value of the PUCCH carrying the SL-PRS ACK/NACK information: The terminal device obtains the priority value that is of the configured grant resource CG and that is configured by the radio access network device; and uses, as the priority value of the PUCCH carrying the SL-PRS ACK/NACK information, the largest value among the priority values of the configured grant CG resources.
(3) Determine the priority value of the PUCCH carrying the SL-PRS ACK/NACK information as a largest value among priority values indicated by SCI carried on a PSCCH sent on a resource scheduled by using DCI, where the DCI is used to schedule the resource carrying the sidelink channel/signal.

The DCI is sent by the radio access network device to the terminal device before the terminal device sends the uplink channel/signal. The DCI may be used to schedule an SL-PRS resource (to be specific, a resource used to send the SL-PRS). The terminal device may send the SL-PRS on the resource scheduled by using the DCI. The DCI corresponds to a PUCCH that is fed back, and the PUCCH may carry the SL-PRS ACK/NACK information. Before SL-PRS transmission on the resource scheduled by using the DCI, the terminal device may first determine the SCI carried on the PSCCH to be sent on the resource, and may indicate the priority value of the SL-PRS in the SCI. The priority value corresponding to the sidelink channel/signal sent on the resource scheduled by using the DCI is the priority value that may be indicated by the SCI. In this case, the priority value of the SL-PRS ACK/NACK information may be the largest value among the priority values that may be indicated by the SCI carried on the PSCCH sent on the resource scheduled by using the DCI.

Specifically, the terminal device may determine, based on the following steps, the priority value of the PUCCH carrying the SL-PRS ACK/NACK information: The terminal device receives the DCI from the radio access network device; and the terminal device uses, as the priority value of the PUCCH carrying the SL-PRS ACK/NACK information, the largest value among the priority values that may be indicated by the SCI carried by the PSCCH to be sent on the resource scheduled by using the DCI. Optionally, the DCI may be DCI in a DCI 3_2 format.

In some embodiments of this application, when determining that no SL-PRS or PSCCH is sent, the terminal device may determine, according to the foregoing method (2) and/or method (3), the priority value of the PUCCH carrying the SL-PRS ACK/NACK information.

In some embodiments of this application, the largest value in the foregoing methods may alternatively be replaced with a value that meets a specified condition or a value of another type, for example, may be replaced with a value greater than or equal to a specified threshold or a second largest value.

In the foregoing methods, the priority value of the SL-PRS ACK/NACK information is the same as the priority value of the PUCCH carrying the SL-PRS ACK/NACK information.

In some embodiments of this application, the uplink channel/signal may include the SL-PRS ACK/NACK information and the SL HARQ-ACK information, and the SL-PRS ACK/NACK information and the SL HARQ-ACK information are carried on the PUCCH, in other words, the SL-PRS ACK/NACK information and the SL HARQ-ACK information are multiplexed on the same PUCCH. In this scenario, the terminal device may use a larger one of the priority value of the SL-PRS ACK/NACK information and a priority value of the SL HARQ-ACK information as the priority value of the uplink channel/signal.

When the SL-PRS ACK/NACK information and the SL HARQ-ACK information are multiplexed on the same PUCCH, one or more pieces of SL-PRS ACK/NACK information may be multiplexed, and one or more pieces of SL HARQ-ACK information may also be multiplexed. Therefore, the following four cases exist.

Case 1: When one piece of SL-PRS ACK/NACK information and one piece of SL HARQ-ACK information are multiplexed on the same PUCCH, the priority value of the PUCCH is a larger one of a priority value of the piece of SL-PRS ACK/NACK information and a priority value of the piece of SL HARQ-ACK information. For a method in which the terminal device determines the priority value of the piece of SL-PRS ACK/NACK information, refer to the foregoing method (1), method (2), or method (3). For a method in which the terminal device determines the priority value of the piece of SL HARQ-ACK information, refer to a method defined in a related communication standard. Details are not described herein.

Case 2: When a plurality of pieces of SL-PRS ACK/NACK information and one piece of SL HARQ-ACK information are multiplexed on the same PUCCH, the priority value of the PUCCH is a largest value among priority values of the plurality of pieces of SL-PRS ACK/NACK information and a priority value of the piece of SL HARQ-ACK information. For a method in which the terminal device determines a priority value of each piece of SL-PRS ACK/NACK information, refer to the foregoing method (1), method (2), or method (3). For a method in which the terminal device determines the priority value of the piece of SL HARQ-ACK information, refer to a method defined in a related communication standard. Details are not described herein.

Case 3: When a plurality of pieces of SL-PRS ACK/NACK information and a plurality of pieces of SL HARQ-ACK information are multiplexed on the same PUCCH, the priority value of the PUCCH is a largest value among priority values of the plurality of pieces of SL-PRS ACK/NACK information and priority values of the plurality of pieces of SL HARQ-ACK information. For a method in which the terminal device determines a priority value of each piece of SL-PRS ACK/NACK information, refer to the foregoing method (1), method (2), or method (3). For a method in which the terminal device determines a priority value of the SL HARQ-ACK information, refer to a method defined in a related communication standard. Details are not described herein.

In the foregoing case 2 and case 3, when the terminal device determines the priority value of each piece of SL-PRS ACK/NACK information according to the foregoing method (3), a plurality of pieces of DCI received by the terminal device correspond to the same PUCCH. A resource scheduled by using each of the plurality of pieces of DCI may be used to send one of a plurality of SL-PRSs, and the plurality of pieces of SL-PRS ACK/NACK information are carried on the same PUCCH. The priority value of each piece of SL-PRS ACK/NACK information may be determined based on the DCI for scheduling the resource used by the SL-PRS. For details, refer to the foregoing method (3).

That the plurality of pieces of DCI correspond to the same PUCCH may be understood as follows: When the radio access network device sends, to the terminal device, the plurality of pieces of DCI to schedule SL-PRS resources used by the terminal device, each of the plurality of pieces of DCI may include time interval information, where the time interval information indicates a time interval, and the time interval is a time interval from receiving the DCI to feeding back the PUCCH. After receiving the DCI, the terminal device needs to feed back the PUCCH based on a moment indicated by the time interval, in other words, send, to the radio access network device through the PUCCH, SL-PRS ACK/NACK information transmitted on a resource scheduled by using the DCI. When the plurality of pieces of DCI correspond to a same moment for feeding back the PUCCH, the plurality of pieces of DCI correspond to the same PUCCH that is fed back. In other words, the plurality of pieces of DCI correspond to the same PUCCH.

Case 4: When one piece of SL-PRS ACK/NACK information and a plurality of pieces of SL HARQ-ACK information are multiplexed on the same PUCCH, the priority value of the PUCCH is a largest value in a priority value of the piece of SL-PRS ACK/NACK information and priority values of the plurality of pieces of SL HARQ-ACK information. For a method in which the terminal device determines the priority value of the piece of SL-PRS ACK/NACK information, refer to the foregoing method (1), method (2), or method (3). For a method in which the terminal device determines a priority value of each piece of SL HARQ-ACK information, refer to a method defined in a related communication standard. Details are not described herein.

In some embodiments of this application, the largest value in the foregoing methods may alternatively be replaced with a value that meets a specified condition or a value of another type, for example, may be replaced with a value greater than or equal to a specified threshold or a second largest value.

In some embodiments of this application, the terminal device may obtain a priority value indicated by SCI, and use, as the priority value of the sidelink channel/signal, the priority value indicated by the SCI. The SCI is used to schedule, in the dedicated resource pool, a resource for carrying the sidelink channel/signal. Optionally, the SCI includes a priority field, and the priority field indicates the priority value of the sidelink channel/signal. For example, the priority field may be an "indicator (priority)" field, and the field may be 3 bits. When a value of the field is "000", the priority value indicated by the field may be 1; or when a value of the field is "001", the priority value indicated by the field may be 2. The rest can be deduced by analogy. Certainly, a format of the priority field and an indication manner of the priority value are not limited to a format and a manner corresponding to the "indicator" field. The format of the priority field and the indication manner of the priority value may alternatively be implemented in other ways. This is not specifically limited in embodiments of this application.

The SCI may be SCI sent by the terminal device. In other words, the terminal device may indicate, in the sent SCI, a priority value of a sidelink channel/signal that needs to be sent this time. Specifically, before sending a sidelink signal in the dedicated resource pool through a sidelink (to another terminal device), the terminal device may first send, through the sidelink (to the another terminal device), SCI indicating or for scheduling a resource for carrying the to-be-sent sidelink signal in the dedicated resource pool (where the another terminal device may determine, based on the SCI, the resource for carrying the sidelink signal, and receive the sidelink signal on the corresponding resource), and includes, in the sent SCI, a priority value indicating the to-be-sent sidelink channel/signal. For example, the terminal device may perform processing based on the following steps: The terminal device sends the SCI to the another terminal device on a PSCCH, where the SCI includes information indicating a dedicated resource for sending the sidelink channel/signal, and the SCI further includes information indicating the priority value of the sidelink channel/signal. The terminal device sends the sidelink channel/signal to the another terminal device on the dedicated resource.

In some embodiments of this application, the priority value of the sidelink channel/signal may be configured by the terminal device. Alternatively, the priority value of the sidelink channel/signal may be requested or indicated by another device to the terminal device, and the terminal device may configure the priority value of the sidelink channel/signal based on the request or indication of the another device. The another device may be, for example, another terminal device that performs SL communication with the terminal device, another terminal device that performs positioning with the terminal device, a network device (for example, a radio access network device), or a positioning server.

In some embodiments of this application, the priority value of the sidelink channel/signal may be configured based on a positioning requirement on sidelink positioning. Specifically, the positioning requirement on sidelink positioning generally includes an accuracy requirement and a latency requirement. The priority value configured for the sidelink channel/signal may be negatively correlated with accuracy required for positioning. To be specific, higher accuracy required for positioning indicates a smaller priority value configured for the sidelink channel/signal, and correspondingly indicates a higher priority of the sidelink channel/signal. Lower accuracy required for positioning indicates a larger priority value configured for the sidelink channel/signal, and correspondingly indicates a lower priority of the sidelink channel/signal. The priority value configured for the sidelink channel/signal may be positively correlated with a value of a latency required for positioning. To be specific, a larger latency required for positioning indicates a larger priority value configured for the sidelink channel/signal, and correspondingly indicates a lower priority of the sidelink channel/signal. A smaller latency required for positioning indicates a smaller priority value configured for the sidelink channel/signal, and correspondingly indicates a higher priority of the sidelink channel/signal.

In some embodiments of this application, that the terminal device determines the channel/signal with the higher priority based on the priority value of the uplink channel/signal and the priority value of the sidelink channel/signal may be specifically implemented in at least one of the following manners 1 to 4:
Manner 1: The terminal device may use a channel/signal with a smaller priority value in the uplink channel/signal and the sidelink channel/signal as the channel/signal with the higher priority, and use a channel/signal with a larger priority value in the uplink channel/signal and the sidelink channel/signal as the channel/signal with the lower priority.

Manner 2: When determining that the priority value of the uplink channel/signal is equal to the priority value of the sidelink channel/signal, the terminal device may use the uplink channel/signal as the channel/signal with the higher priority, and use the sidelink channel/signal as the channel/signal with the lower priority.

Manner 3: When determining the priority value of the uplink channel/signal as a first specified value, the terminal device may determine the channel/signal with the higher priority based on a specified priority threshold and the priority value of the sidelink channel/signal.

When determining the channel/signal with the higher priority based on the priority threshold and the priority value of the sidelink channel/signal, the terminal device may determine the sidelink channel/signal as the channel/signal with the higher priority and the uplink channel/signal as the channel/signal with the lower priority when determining that the priority value of the sidelink channel/signal is smaller than the priority threshold. Alternatively, when determining that the priority value of the sidelink channel/signal is greater than the priority threshold, the terminal device may determine the uplink channel/signal as the channel/signal with the higher priority and the sidelink channel/signal as the channel/signal with the lower priority. Alternatively, when determining that the priority value of the sidelink channel/signal is equal to the priority threshold, the terminal device may determine the uplink channel/signal as the channel/signal with the higher priority and the sidelink channel/signal as the channel/signal with the lower priority.

Optionally, the first specified value may be 0 or 1.

Manner 4: When determining the priority value of the uplink channel/signal as a second specified value and that no specified priority threshold exists, the terminal device may determine the uplink channel/signal as the channel/signal with the higher priority and the sidelink channel/signal as the channel/signal with the lower priority.

Optionally, the second specified value may be 1.

In some embodiments of this application, the priority threshold in the foregoing manner 3 and manner 4 may be a priority threshold configured for the dedicated resource pool of the sidelink channel/signal; a largest value among priority thresholds configured for communication resource pools; a largest value in priority thresholds configured for the shared resource pool; or a largest value among priority thresholds configured for communication resource pools and priority thresholds configured for the shared resource pool.

The communication resource pool may be a resource pool that does not carry the sidelink channel/signal. For example, the communication resource pool may be a resource pool that does not carry the SL-PRS. The shared resource pool may be a resource pool that can carry data and the sidelink channel/signal. For example, the shared resource pool may be a resource pool that can carry the data and the SL-PRS. The dedicated resource pool may be a resource pool carrying only the sidelink channel/signal. For example, the dedicated resource pool may be a resource pool dedicated to carrying the SL-PRS. Carrying may also be understood as transmission/reception.

In the foregoing method, when one communication resource pool exists, the priority thresholds configured for the communication resource pool may include a priority threshold configured for the communication resource pool, and the largest value in the priority thresholds configured for the communication resource pool may be the priority threshold configured for the communication resource pool. When a plurality of communication resource pools exist, the priority thresholds configured for the communication resource pool may include priority thresholds configured for the plurality of communication resource pools, and the largest value in the priority thresholds configured for the communication resource pool may be a largest value in the priority thresholds configured for the plurality of communication resource pools.

In some embodiments of this application, the largest value in the foregoing methods may alternatively be replaced with a value that meets a specified condition or a value of another type, for example, may be replaced with a value greater than or equal to a specified threshold or a second largest value.

Optionally, the foregoing priority thresholds may be indicated by the network device (for example, may be indicated by the network device by using the configuration information in the foregoing embodiment), or may be preconfigured in the terminal device.

For example, the dedicated resource pool may be an SL-PRS dedicated resource pool, the priority threshold configured for the dedicated resource pool may be an SL priority threshold (sl-PriorityThreshold), and the priority threshold configured for the communication resource pool and the priority threshold configured for the shared resource pool may both be a priority threshold of the SL-PRS relative to ultra-reliable and low-latency UL (sl-PriorityThreshold-UL-URLLC).

In some embodiments of this application, when the priority threshold corresponding to the dedicated resource pool is configured for the terminal device, the terminal device may preferably set the specified priority threshold as the priority threshold corresponding to the dedicated resource pool. When the priority threshold corresponding to the dedicated resource pool is not configured for the terminal device, but the priority threshold of the communication resource pool or the shared resource pool is configured for the terminal device, the terminal device may use, as the specified priority threshold, the largest value in the priority thresholds configured for the communication resource pool/the largest value in the priority thresholds configured for the shared resource pool/the largest value in the priority thresholds configured for the communication resource pool and the priority thresholds configured for the shared resource pool. When no priority threshold corresponding to any resource pool is configured for the terminal device (including a case in which no priority threshold is configured for the dedicated resource pool, the communication resource pool, and the shared resource pool), the terminal device may determine that no specified priority threshold exists.

In some embodiments of this application, for each communication resource pool and each shared resource pool, the network device (for example, the radio access network device) may optionally set corresponding priority thresholds for each communication resource pool and each shared resource pool. When the network device sets the priority thresholds for each communication resource pool and each shared resource pool, the network device may indicate the specified priority threshold to the terminal device by using configuration information.

In some embodiments of this application, the uplink channel/signal in content of the foregoing method 4 may include at least one of the following: a PUCCH channel/signal carrying SL HARQ-ACK information; an uplink channel/signal other than an uplink channel/signal of a specified type; and a PUCCH channel/signal carrying SL-PRS ACK/NACK information.

The SL HARQ-ACK information may be received by the terminal device on a PSFCH; or when the terminal device receives no SL HARQ-ACK information on a PSFCH, the SL HARQ-ACK information may be NACK information by default.

The uplink channel/signal of the specified type may include at least one of the following: an uplink PRACH channel/signal; a PUSCH scheduled by using a RAR and a subsequently retransmitted channel/signal; a PUSCH in a type-2 random access procedure and a subsequently retransmitted channel/signal; a PUCCH channel/signal carrying a HARQ-ACK message of successRAR (successRAR); and a PUCCH channel/signal scheduled by using DCI, where CRC in the DCI is scrambled by using a TC-RNTI. Optionally, the DCI may be DCI 1_0, that is, DCI in a format 1_0.

S402: The terminal device sends or receives the channel/signal with the higher priority.

According to the foregoing method, after determining the channel/signal with the higher priority from the uplink channel/signal and the sidelink channel/signal, the terminal device may send or receive the channel/signal with the higher priority, to ensure communication quality and communication efficiency of the channel/signal with the higher priority, and further avoid a case in which both uplink channel/signal-based communication and sidelink channel/signal-based communication fail due to a conflict, thereby improving overall communication efficiency.

In some embodiments of this application, before performing step S401 or step S402, the terminal device may further first determine that transmission of the uplink channel/signal and transmission of the sidelink channel/signal overlap in time; total power for transmission of the uplink channel/signal and transmission of the sidelink channel/signal is greater than total transmit power of the terminal device; or transmission of the uplink channel/signal and transmission of the sidelink channel/signal overlap in time, and total power for transmission of the uplink channel/signal and transmission of the sidelink channel/signal is greater than total transmit power of the terminal device. In the foregoing scenario, uplink channel/signal-based communication and sidelink channel/signal-based communication are prone to conflict with each other, and both communication fail. Therefore, the method provided in the foregoing embodiment can be performed in the foregoing scenario, to send the channel/signal with the higher priority, thereby improving the overall communication efficiency.

Overlapping in embodiments of this application may be full overlapping (that is, complete overlapping) or partial overlapping.

In some embodiments of this application, if the terminal device does not have a capability of simultaneously sending the uplink channel/signal and the sidelink channel/signal on one carrier or two respective carriers, when the terminal device needs to simultaneously send the uplink channel/signal and the sidelink channel/signal, the terminal device may determine the channel/signal with the higher priority from the uplink channel/signal and the sidelink channel/signal according to the method in the foregoing embodiment, and only send the channel/signal with the higher priority.

In some other embodiments of this application, if the terminal device does not have a capability of simultaneously sending the uplink channel/signal and receiving the sidelink channel/signal on one carrier or two respective carriers, when the terminal device needs to simultaneously send the uplink channel/signal and receive the sidelink channel/signal, the terminal device may determine the channel/signal with the higher priority from the uplink channel/signal and the sidelink channel/signal according to the method in the foregoing embodiment, and only perform one of sending the uplink channel/signal with the higher priority and receiving the sidelink channel/signal with the higher priority.

Simultaneous transmission of the uplink channel/signal and the sidelink channel/signal may be understood as that a process of sending the uplink channel/signal and a process of sending the sidelink channel/signal overlap in time. Simultaneous transmission of the uplink channel/signal and reception of the sidelink channel/signal may be understood as that a process of sending the uplink channel/signal and a process of receiving the sidelink channel/signal overlap in time.

In some other embodiments of this application, if the terminal has a capability of sending the uplink channel/signal and the sidelink channel/signal on two respective carriers, when the terminal needs to simultaneously send the uplink channel/signal and the sidelink channel/signal on the two respective carriers, transmission of the uplink channel/signal and transmission of the sidelink channel/signal overlap in a period of time, and total transmit power for simultaneously sending the uplink channel/signal and the sidelink channel/signal in the period of time exceeds total transmit power of the terminal device, if the terminal determines, according to the method provided in the foregoing embodiment, that the priority of the sidelink channel/signal is higher, the terminal reduces, before sending the uplink channel/signal, transmit power for sending the uplink channel/signal, so that the total transmit power for simultaneously sending the uplink channel/signal and the sidelink channel/signal does not exceed the total transmit power of the terminal device. Alternatively, if the priority of the uplink channel/signal is higher, the terminal device reduces, before sending the sidelink channel/signal, transmit power for sending the sidelink channel/signal, so that the total transmit power for simultaneously sending the uplink channel/signal and the sidelink channel/signal does not exceed the total transmit power of the terminal device.

In some embodiments of this application, when the terminal device determines that sending of one or more sidelink channels/signals and transmission of a plurality of uplink channels/signals overlap in time (transmission of the plurality of uplink channels/signals does not overlap in time), if the terminal device determines, according to the method in the foregoing embodiment, that a priority of sending at least one sidelink channel/signal is higher than a priority of sending all the uplink channels/signals, the terminal device may send the sidelink channel/signal. When the terminal device determines that transmission of one or more uplink channels/signals and transmission of a plurality of sidelink channels/signals overlap in time (transmission of the plurality of sidelink channels/signals does not overlap in time), if the terminal device determines, according to the method in the foregoing embodiment, that a priority of transmission of at least one uplink channel/signal is higher than a priority of transmission of all the sidelink channels/signals, the terminal device may send the uplink channel/signal. When the terminal device determines that transmission of one sidelink channel/signal and transmission of one or more uplink channels/signals overlap in time, if the terminal device determines, according to the method in the foregoing embodiment, that a priority of transmission of the sidelink channel/signal is higher than a priority of transmission of all the uplink channels/signals, the terminal device may send the sidelink channel/signal. When the terminal device determines that transmission of one sidelink channel/signal and transmission of one or more uplink channels/signals overlap in time, if the terminal device determines, according to the method in the foregoing embodiment, that a priority of transmission of at least one uplink channel/signal is higher than a priority of transmission of the sidelink channel/signal, the terminal device may send the uplink channel/signal.

According to the method provided in the foregoing embodiment, the terminal device may perform prioritization between the uplink channel/signal and the sidelink channel/signal, and send or receive the channel/signal with the higher priority, to ensure the communication efficiency of the channel/signal with the higher priority, and avoid a case in which both communication fails due to a conflict between uplink communication and sidelink communication, thereby improving the overall communication efficiency.

The following describes the solutions provided in this application with reference to specific embodiments.

### Embodiment 1

Based on the foregoing embodiments and the same technical concept, a communication method provided in this embodiment of this application may include: A terminal device determines a channel/signal with a smaller priority value in an uplink channel/signal and a sidelink channel/signal as a channel/signal with a higher priority; or a terminal device determines an uplink channel/signal in the uplink channel/signal and a sidelink channel/signal as a channel/signal with a higher priority.

Optionally, the uplink channel/signal may be a PUCCH channel/signal carrying SL HARQ-ACK information, the sidelink channel may be a PSCCH for scheduling an SL-PRS, and the sidelink signal may be the SL-PRS.

According to the foregoing communication method, in a possible solution, the terminal device may obtain a priority value of the uplink channel/signal and a priority value of the sidelink channel/signal, and determine the channel/signal with the higher priority based on the priority value of the uplink channel/signal and the priority value of the sidelink channel/signal.

That the terminal device determines the channel/signal with the higher priority based on the priority value of the uplink channel/signal and the priority value of the sidelink channel/signal specifically includes: The terminal device uses the channel/signal with the smaller priority value in the uplink channel/signal and the sidelink channel/signal as the channel/signal with the higher priority, and uses a channel/signal with a larger priority value in the uplink channel/signal and the sidelink channel/signal as a channel/signal with a lower priority. Optionally, the following may be further included: When the priority value of the uplink channel/signal is equal to the priority value of the sidelink channel/signal, the terminal device uses the uplink channel/signal as the channel/signal with the higher priority, and uses the sidelink channel/signal as the channel/signal with the lower priority.

According to the foregoing solution, when the terminal device sends/receives the SL-PRS (where transmission/reception of SL-PRS may also be referred to as SL-PRS transmission/reception) in a dedicated resource pool and the terminal device transmits the PUCCH carrying the SL HARQ-ACK information, a corresponding priority determining method may specifically include:
If a priority value of PUCCH transmission with an SL HARQ-ACK information report (which may be for a data resource pool/shared resource pool) is smaller than a priority value of SL-PRS transmission, PUCCH transmission with an SL HARQ-ACK information report has a higher priority; or if a priority value of PUCCH transmission is greater than a priority value of SL-PRS transmission, SL-PRS transmission has a higher priority.

The SL HARQ-ACK information is received by the terminal device on a PSFCH, and the terminal device reports the SL HARQ-ACK information on the PUCCH; or the SL HARQ-ACK information that exists when the terminal device receives no PSFCH is NACK by default, and the terminal reports the SL HARQ-ACK information on the PUCCH.

A priority value of SL-PRS transmission/reception may be indicated by a "priority" indicator in first-stage SCI 1-B for scheduling the SL-PRS in the dedicated resource pool. The indicator may be 3 bits. When a value of the indicator is "000", the corresponding priority value is 1; or when a value of the indicator is "001", the corresponding priority value is 2. The rest can be deduced by analogy.

Optionally, the communication method may further include: sending or receiving the channel/signal with the higher priority.

According to the foregoing communication method, in another possible solution, the terminal device may determine that PUCCH transmission with an SL HARQ-ACK information report always has a higher priority. Alternatively, the terminal device may determine that SL-PRS transmission/reception always has a lower priority, and the priority of SL-PRS transmission/reception is lower than that of any uplink channel or signal.

Optionally, the communication method may further include: sending or receiving the channel/signal with the higher priority.

According to the method in Embodiment 1, prioritization is performed between PUCCH transmission with an SL HARQ-ACK information report and the priority of SL-PRS transmission/reception, so that when PUCCH transmission with an SL HARQ-ACK information report conflicts with SL-PRS transmission/reception, corresponding processing can be performed based on a prioritization result, thereby improving overall communication efficiency.

### Embodiment 2

Based on the foregoing embodiments and the same technical concept, a communication method provided in this embodiment of this application may include: A terminal device determines, based on a priority value of a sidelink channel/signal and a priority value of an uplink channel/signal other than an uplink channel/signal of a specified type, a channel/signal with a higher priority in the sidelink channel/signal and the uplink channel/signal other than the uplink channel/signal of the specified type; and/or the terminal device determines that a priority of the uplink channel/signal of the specified type is higher than a priority of the sidelink channel/signal.

For the uplink channel/signal other than the uplink channel/signal of the specified type, refer to the descriptions in the foregoing embodiments. Details are not described herein again. The sidelink channel is a PSCCH for scheduling an SL-PRS, and the sidelink signal is the SL-PRS.

According to the foregoing communication method, in a possible solution, the terminal device may obtain the priority value of the uplink channel/signal and the priority value of the sidelink channel/signal, and determine the channel/signal with the higher priority based on the priority value of the uplink channel/signal and the priority value of the sidelink channel/signal. The uplink channel/signal is the uplink channel/signal other than the uplink channel/signal of the specified type.

In this solution, that the terminal device determines the channel/signal with the higher priority based on the priority value of the uplink channel/signal and the priority value of the sidelink channel/signal specifically includes: When the priority value of the uplink channel/signal is a first specified value, the terminal device determines the channel/signal with the higher priority based on a specified priority threshold and the priority value of the sidelink channel/signal; or when the priority value of the uplink channel/signal is a second specified value and no specified priority threshold exists, the terminal device determines the uplink channel/signal as the channel/signal with the higher priority. For a specific implementation of the method, refer to related descriptions in the foregoing embodiments. Details are not described herein again.

According to the foregoing solution, when prioritization is performed between the SL-PRS and the UL channel (for example, a PUSCH and a PUCCH that carry other content except specified content, where the specified content may be content of the uplink channel/signal of the specified type) other than the uplink channel/signal of the specified type, the following two cases may exist.

Case 1: The priority value of the UL channel other than the uplink channel/signal of the specified type is 1.

In this case, there are two prioritization manners.
(1) If the terminal device is configured with a higher-layer parameter, in other words, the specified priority threshold (for example, sl-PriorityThreshold-UL-URLLC, that is, a priority threshold of an SL-PRS relative to ultra-reliable and low-latency UL): if a priority value of SL-PRS transmission/reception is smaller than the priority threshold, SL-PRS transmission/reception has a higher priority; otherwise, UL transmission has a higher priority.

The priority threshold is configured for each SL-PRS dedicated resource pool. Optionally, if the priority threshold is not configured for the dedicated resource pool, but the priority threshold is configured for a communication resource pool or a shared resource pool, a value of the priority threshold of the SL-PRS dedicated resource pool is a largest one in the priority thresholds configured for the communication resource pool or the shared resource pool. In this way, there are more opportunities to send the SL-PRS in the dedicated resource pool.

In this embodiment of this application, the priority threshold may also be referred to as a priority threshold value, a threshold value, or the like.

In the foregoing method, when the priority value of the UL channel (for example, the PUSCH or the PUCCH) other than the uplink channel/signal of the specified type is 1, the uplink channel/signal is already a channel/signal with a higher priority. The priority threshold corresponding to the SL-PRS with respect to UL is configured for the terminal device. In this case, even if the uplink channel/signal is already the channel with the higher priority, the priority threshold may be set, so that SL-PRS transmission or reception has a higher priority than UL transmission, thereby increasing an SL-PRS transmission or reception opportunity.

(2) If no priority threshold is configured for the terminal device (including that no priority threshold is configured for an SL-PRS dedicated resource pool, a communication resource pool, and a shared resource pool), UL transmission always has a higher priority than SL-PRS transmission/reception.

Case 2: The priority value of the UL channel other than the uplink channel/signal of the specified type is 0.

In this case, if a priority value of SL-PRS transmission/reception is smaller than another configured priority threshold (for example, sl-PriorityThreshold, that is, an SL priority threshold), SL-PRS transmission/reception has a higher priority; otherwise, UL transmission has a higher priority. The priority threshold is a specific threshold configured for an SL-PRS dedicated resource pool.

In the foregoing method, when the priority value of the UL channel (for example, the PUSCH or the PUCCH) other than the uplink channel/signal of the specified type is 0, the uplink channel/signal is already a channel/signal with a lower priority. The another SL priority threshold is configured for the terminal device. In this case, even if the uplink channel/signal is already the channel with the lower priority, the priority threshold may be set, so that SL-PRS transmission or reception has a lower priority than UL transmission, thereby increasing a UL transmission opportunity.

According to the foregoing communication method, in another possible solution, the terminal device may determine that the uplink channel/signal of the specified type always has a higher priority. Alternatively, the terminal device may determine that a priority of SL-PRS transmission/reception is always lower than a priority of the uplink channel/signal of the specified type.

Optionally, the communication method may further include: sending or receiving the channel/signal with the higher priority.

According to the method in Embodiment 2, some special ULs (that is, uplink channels/signals of the specified type) always have a higher priority. For another uplink PUCCH or PUSCH channel except the some special ULs, the terminal device may control, based on the priority threshold, prioritization between SL-PRS transmission/reception and the PUCCH/PUSCH channel, to perform corresponding processing based on a prioritization result, thereby improving overall communication efficiency.

### Embodiment 3

Based on the foregoing embodiments and the same technical concept, a method provided in this embodiment of this application may include: a priority value of a PUCCH channel/signal carrying SL-PRS ACK/NACK information is: a priority value of the sent SL-PRS; a largest value among priority values configured for configured grant CG resources, where the configured grant resource is used to carry the SL-PRS; or a largest value among priority values corresponding to a sidelink channel/signal (that is, the SL-PRS) sent on a resource scheduled by using DCI, where the DCI is used to schedule the resource carrying the SL-PRS.

Optionally, before determining a priority value of an uplink channel/signal as a largest value in a plurality of priority values, the method further includes: determining that no SL-PRS or PSCCH is sent.

According to the foregoing method, during specific implementation, a terminal device may determine, according to the following method, a priority of PUCCH transmission with the SL-PRS ACK/NACK information.
(1) After the terminal sends the SL-PRS, a priority value of the SL-PRS ACK/NACK information is the same as the priority value of the SL-PRS.
(2) A network device grants, by using a grant resource dynamically scheduled or configured by using DCI 3_2, the terminal device to send the SL-PRS, but the terminal device sends no SL-PRS on any resource. In this scenario, a priority value of feedback information of the terminal device on the PUCCH is the same as a priority value of the SL-PRS that is not actually sent.

When the terminal device sends the SL-PRS in a dedicated resource pool, resource allocation has the following two modes.

Mode 1: A resource for SL-PRS transmission may be a resource dynamically scheduled by a network side (for example, a radio access network device) (dynamic grant, DG), or a configured grant CG resource.

The configured grant CG resource includes the following two types.
(1) CG type 1 (type1): An SL-PRS grant resource is provided by the network side to the terminal device through dedicated signaling RRC. After receiving configuration information, the terminal device stores the SL-PRS grant resource, and when the SL-PRS needs to be sent, the terminal device directly uses the configured grant resource to send the SL-PRS.
   For the CG type 1, a resource configuration provided by the network side may include: a resource pool index, a CG index, a CG periodicity, a time domain resource position, a reference system frame number (system frame number, SFN) used to determine a time domain offset of a resource in time domain, a time offset relative to the reference system frame number, an SL-PRS resource identifier, a quantity of SL-PRS symbols, an SL-PRS density in frequency domain, and an SL-PRS offset in frequency domain.
(2) CG type 2 (type2): An SL-PRS grant resource is activated or deactivated by a PDCCH (physical downlink control channel, physical downlink control channel). When the PDCCH activates a CG type 2 resource, the terminal device stores the SL-PRS grant resource; or when the PDCCH deactivates a CG type 2 resource, the terminal device clears the stored SL-PRS grant resource.

For the CG type 2, a resource configuration provided by the network side may include: a CG index, a CG periodicity, a quantity of SL-PRS symbols, an SL-PRS density in frequency domain, and an SL-PRS offset in frequency domain. Downlink control information DCI 3_2 used to schedule an SL-PRS resource is used to activate or deactivate the CG type 2.

Mode 2: The terminal autonomously determines a sending resource. Specifically, a higher layer inside the terminal device requests the terminal device to determine a resource set, and the higher layer selects a resource from the resource set to send the SL-PRS.

(3) The network device configures grant resources for SL-PRS transmission, but the terminal device sends no PSCCH channel. In this scenario, a priority value of feedback information of the terminal device on the PUCCH is a largest value among priority values corresponding to all the configured grant resources.

(4) The network device schedules a resource by using DCI 3_2 for SL-PRS communication, but the terminal device sends no PSCCH channel. In this scenario, a priority value of feedback information of the terminal device on the PUCCH is a largest value among priority values that can be indicated by SCI carried on a PSCCH sent on the resource scheduled by using the DCI 3_2.

DCI 3_0 and the DCI 3_2 are DCI with different formats and functions.

Based on the foregoing embodiments and the same technical concept, another method provided in this embodiment of this application may include: when both SL-PRS ACK/NACK information and SL HARQ-ACK information are carried on a PUCCH, a priority value of the PUCCH is a larger one of a priority value of the SL-PRS ACK/NACK information and a priority value of the SL HARQ-ACK information; or a priority of the PUCCH is a lowest priority in a priority of the SL-PRS ACK/NACK information and a priority of the SL HARQ-ACK information.

According to the foregoing method, if the SL-PRS ACK/NACK information and the SL HARQ-ACK information need to be multiplexed on a same PUCCH, a value of a priority value of the PUCCH channel carrying multiplexed feedback information is a larger one of the priority values of the SL-PRS ACK/NACK information and the SL HARQ-ACK information. In other words, the priority of the PUCCH channel carrying the multiplexed feedback information is a lowest one in the priorities of the SL-PRS ACK/NACK information and the SL HARQ-ACK information. The priority of the SL HARQ-ACK information may be determined according to the relevant method in the foregoing embodiments, and the priority of the SL-PRS ACK/NACK information may be determined according to the foregoing method in Embodiment 3.

According to the foregoing method, a terminal device may determine the priority of the PUCCH carrying the SL-PRS ACK/NACK information report, and may determine the priority of the PUCCH on which the SL-PRS ACK/NACK information and the SL HARQ-ACK information are multiplexed. This facilitates prioritization between the PUCCH and a sidelink channel/signal.

Optionally, when prioritization is performed between the sidelink channel/signal and the PUCCH carrying the SL-PRS ACK/NACK information, the prioritization method described in Embodiment 1 or Embodiment 2 may be used. Details are not described herein again.

Optionally, when prioritization is performed between the sidelink channel/signal and the PUCCH on which the SL-PRS ACK/NACK information and the SL HARQ-ACK information are multiplexed, the prioritization method described in Embodiment 1 or Embodiment 2 may be used. Details are not described herein again.

Optionally, the largest value in this embodiment of this application may be replaced with a value that meets a specified condition or a value of another type, for example, may be replaced with a value greater than or equal to a specified threshold.

It should be noted that the methods described in the foregoing embodiments are merely examples of execution methods applicable to the solutions of this application, and do not constitute a limitation on the solutions of this application. Execution methods that do not conflict with each other in embodiments of this application may be used in combination. For example, the prioritization method in Embodiment 1 or Embodiment 2 may be used in the scenario of Embodiment 3, and similar cases are not listed one by one.

The foregoing mainly describes, from the perspective of the terminal device, the solutions provided in embodiments of this application. It may be understood that, to implement the foregoing functions, the terminal device or the network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional units according to the foregoing method examples. For example, each functional unit may be obtained through division based on each corresponding function, or two or more functions may be integrated into one unit. The integrated unit may be implemented in a form of hardware, or may be implemented in a form of a software functional unit.

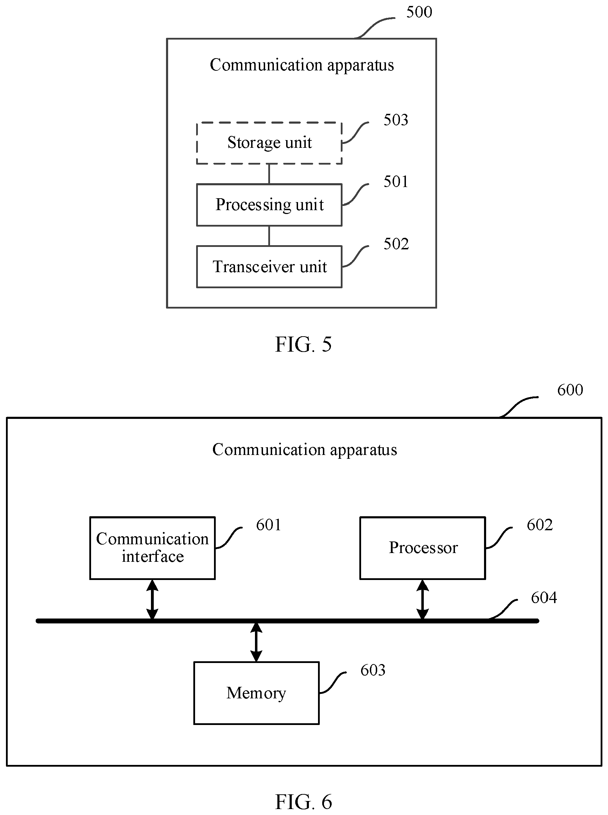

Based on the foregoing embodiments and the same technical concept, an embodiment of this application further provides a communication apparatus, configured to implement a function of the terminal device provided in embodiments of this application. As shown in FIG. 5, the communication apparatus 500 may include a processing unit 501 and a transceiver unit 502. The communication apparatus 500 may be the terminal device in any one of the foregoing embodiments, or the communication apparatus 500 may be an apparatus used in the terminal device in any one of the foregoing embodiments.

In an implementation, the communication apparatus 500 may further include a storage unit 503, configured to store program code and data of the communication apparatus 500. The storage unit 503 may be a memory.

The processing unit 501 may be configured to control and manage an action of the communication apparatus 500. The processing unit 501 may be a processor or a controller, for example, a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), another programmable logic device, a transistor logic device, a hardware component, or any combination thereof. The processing unit may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor.

The transceiver unit 502 may be an interface circuit of the communication apparatus 500, and is configured to receive a signal from another apparatus. For example, when the communication apparatus 500 is implemented in a form of a chip, the transceiver unit 502 may be an interface circuit used by the chip to send a signal to another chip or apparatus and receive a signal from another chip or apparatus.

The communication apparatus 500 may be configured to implement a function of the terminal device provided in embodiments of this application.

In an example, when the communication apparatus 500 is configured to implement the function of the terminal device provided in embodiments of this application, the processing unit 501 may be configured to determine a channel/signal with a higher priority from an uplink channel/signal and a sidelink channel/signal, where the sidelink channel is a PSCCH for scheduling an SL-PRS, and the sidelink signal is the SL-PRS. The determining the channel/signal with the higher priority from the uplink channel/signal and the sidelink channel/signal specifically includes: determining the uplink channel/signal as the channel/signal with the higher priority; or obtaining a priority value of the uplink channel/signal and a priority value of the sidelink channel/signal, and determining the channel/signal with the higher priority based on the priority value of the uplink channel/signal and the priority value of the sidelink channel/signal. The transceiver unit 502 may be configured to send or receive the channel/signal with the higher priority.

In an example, the transceiver unit 502 may include a sending unit and a receiving unit. The sending unit may be configured to perform a sending operation in the foregoing method embodiments, and the receiving unit may be configured to perform a receiving operation in the foregoing method embodiments. For example, the sending unit may be configured to send the channel/signal with the higher priority, or the receiving unit may be configured to receive the channel/signal with the higher priority.

The foregoing uses some operation methods of the terminal device that are performed by the communication apparatus 500 as an example. It may be understood that the processing unit 501 may be further configured to perform a processing related step or operation that is performed by the terminal device in the foregoing method embodiments and that is other than receiving and sending, and the transceiver unit 502 may be further configured to perform another sending and/or receiving-related step or operation performed by the terminal device in the foregoing method embodiments. For details, refer to related descriptions in the foregoing method embodiments. Details are not described herein again.

It should be understood that functional unit division in this embodiment of this application is an example, and is merely logical function division. In actual implementation, there may be another division manner. For example, the transceiver unit 502 may be split into a sending unit, a receiving unit, and the like. In addition, functional modules in embodiments of this application may be integrated into one processor, or may exist alone physically, or two or more modules may be integrated into one module. The integrated module may be implemented in a form of hardware, or may be implemented in a form of a software functional module.

Based on the foregoing embodiments and the same technical concept, this application further provides a communication apparatus. As shown in FIG. 6, the communication apparatus may be an implementation of a hardware circuit of the communication apparatus shown in FIG. 5. The communication apparatus is applicable to perform a function of the terminal device in the foregoing method embodiments. For ease of description, FIG. 6 merely shows main components of the communication apparatus.

As shown in FIG. 6, the communication apparatus 600 may include at least one processor 602. Optionally, the communication apparatus 600 may further include a communication interface 601 and a memory 603. The processor may also be referred to as a processing unit, a processing board, a processing module, a processing apparatus, or the like. The processor 602 may be configured to execute instructions or a program stored in the memory 603. When the instructions or the program stored in the memory 603 is executed, the processor 602 may be configured to perform an operation performed by the processing unit 501 in the foregoing embodiment, and the communication interface 601 may be configured to perform an operation performed by the transceiver unit 502 in the foregoing embodiment.

The memory 603 may be configured to store program instructions and/or data. The memory 603 and the processor 602 may be disposed in a coupling manner, or may be disposed separately. Coupling in this embodiment of this application may be an indirect coupling or a communication connection between apparatuses, units, or modules in an electrical form, a mechanical form, or another form, and is used for information exchange between the apparatuses, the units, or the modules. The processor 602 may cooperate with the memory 603. The processor 602 may execute the program instructions stored in the memory 603. At least one of the at least one memory may be included in the processor.

In an implementation process, steps in the foregoing methods can be implemented by a hardware integrated logic circuit in the processor, or by using instructions in a form of software. The steps of the methods disclosed with reference to embodiments of this application may be performed by a hardware processor, or may be performed by a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Optionally, the processor in this embodiment of this application may be an integrated circuit chip, and has a signal processing capability. In an implementation process, steps in the foregoing method embodiments can be implemented by a hardware integrated logic circuit in the processor, or by using instructions in a form of software. The processor may be a general-purpose processor, a digital signal processing circuit (digital signal processor, DSP), an application-specific integrated chip (application-specific integrated circuit, ASIC), a field programmable gate array (field programmable gate array, FPGA) or another programmable logic device, a discrete gate or a transistor logic device, or a discrete hardware component.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that the memory of the systems and methods described in this specification includes but is not limited to these and any memory of another proper type.

The communication interface 601 is configured to communicate with another device via a transmission medium, so that an apparatus in the communication apparatus 600 can communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter; or the communication interface may be a transceiver integrating a transceiver function, or an interface circuit. The transceiver may also be referred to as a transceiver unit, a transceiver machine, a transceiver apparatus, or the like. The receiver may also be sometimes referred to as a receiver machine, a receiving module, a receiving circuit, or the like. The transmitter may also be sometimes referred to as a transmitter, a transmitter machine, a transmitting module, a transmitting circuit, or the like. The processor may control the transceiver to receive or send a signal. When the transceiver includes the receiver and the transmitter, the processor may control the receiver to perform a receiving operation in the foregoing method embodiments, and the processor may control the transmitter to perform a sending operation in the foregoing method embodiments.

Optionally, the communication apparatus 600 may further include a communication line 604. The communication interface 601, the processor 602, and the memory 603 may be connected to each other through the communication line 604. The communication line 604 may be a peripheral component interconnect (peripheral component interconnect, PCI for short) bus, an extended industry standard architecture (extended industry standard architecture, EISA for short) bus, or the like. The communication line 604 may be classified into an address bus, a data bus, a control bus, and the like. For ease of representation, only one bold line is used for representation in FIG. 6, but this does not mean that there is only one bus or only one type of bus.

The communication apparatus 600 may be a device or an apparatus with a chip, a device or an apparatus with an integrated circuit, or a chip or a chip system in the terminal device or the communication apparatus shown above. This is not specifically limited in this application, provided that the communication apparatus 600 can be configured to perform an operation performed by the terminal device in the foregoing method embodiments.

Based on the foregoing embodiments and the same technical concept, an embodiment of this application further provides a computer-readable storage medium. The computer-readable storage medium stores a computer program or instructions. When the computer program or the instructions are run on a communication apparatus, the communication apparatus is caused to perform the method that is provided in the foregoing embodiments and that is applied to a terminal device.

Based on the foregoing embodiments and the same technical concept, an embodiment of this application further provides a computer program product. The computer program product includes a computer program or instructions. When the computer program or the instructions are executed by a communication apparatus, the method that is provided in the foregoing embodiments and that is applied to a terminal device is implemented.

Based on the foregoing embodiments and the same technical concept, an embodiment of this application further provides a chip system. The chip system includes a processor. The processor is configured to read and execute a software program stored in a memory, to implement the method that is provided in the foregoing embodiments and that is applied to a terminal device.

Optionally, the processor may be a processing module, a microprocessor, or an integrated circuit that is integrated in the chip system.

Optionally, the chip system may further include the memory, and the memory may be coupled to the processor through an interface.

Optionally, the chip system may further include a transceiver, and the transceiver may be an input/output circuit or a communication interface. Optionally, the transceiver may include a receiver and a transmitter.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a terminal device, wherein the method comprises:
determining a channel/signal with a higher priority from an uplink channel/signal and a sidelink channel/signal, wherein the sidelink channel is a physical sidelink control channel PSCCH for scheduling a sidelink positioning reference signal SL-PRS, and the sidelink signal is the SL-PRS; and
sending or receiving the channel/signal with the higher priority; and
the determining the channel/signal with the higher priority from the uplink channel/signal and the sidelink channel/signal comprises:
determining the uplink channel/signal as the channel/signal with the higher priority; or
obtaining a priority value of the uplink channel/signal and a priority value of the sidelink channel/signal, and determining the channel/signal with the higher priority based on the priority value of the uplink channel/signal and the priority value of the sidelink channel/signal.

2. The method according to claim 1, wherein the determining the channel/signal with the higher priority based on the priority value of the uplink channel/signal and the priority value of the sidelink channel/signal comprises:
using a channel/signal with a smaller priority value in the uplink channel/signal and the sidelink channel/signal as the channel/signal with the higher priority;
when the priority value of the uplink channel/signal is equal to the priority value of the sidelink channel/signal, using the uplink channel/signal as the channel/signal with the higher priority;
when the priority value of the uplink channel/signal is a first specified value, determining the channel/signal with the higher priority based on a specified priority threshold and the priority value of the sidelink channel/signal; or
when the priority value of the uplink channel/signal is a second specified value and no specified priority threshold exists, determining the uplink channel/signal as the channel/signal with the higher priority.

3. The method according to claim 2, wherein when the priority value of the uplink channel/signal is the first specified value, the determining the channel/signal with the higher priority based on the priority threshold and the priority value of the sidelink channel/signal comprises:
when the priority value of the sidelink channel/signal is smaller than the priority threshold, determining the sidelink channel/signal as the channel/signal with the higher priority; or
when the priority value of the sidelink channel/signal is greater than the priority threshold, determining the uplink channel/signal as the channel/signal with the higher priority.

4. The method according to claim 2 or 3, wherein the priority threshold is:
a priority threshold configured for a dedicated resource pool of the sidelink channel/signal;
a largest value among priority thresholds configured for communication resource pools;
a largest value among priority thresholds configured for shared resource pools; or
a largest value among priority thresholds configured for communication resource pools and priority thresholds configured for shared resource pools.

5. The method according to any one of claims 2 to 4, wherein the first specified value is 0 or 1, and the second specified value is 1.

6. The method according to any one of claims 2 to 5, wherein the priority threshold is indicated by a network device, or the priority threshold is preconfigured in the terminal device.

7. The method according to any one of claims 2 to 6, wherein the uplink channel/signal comprises at least one of the following:
a physical uplink control channel PUCCH channel/signal carrying sidelink hybrid automatic repeat request-acknowledgement SL HARQ-ACK information;
an uplink channel/signal other than an uplink channel/signal of a specified type; and
a PUCCH channel/signal carrying SL-PRS acknowledgement/negative acknowledgement ACK/NACK information.

8. The method according to claim 7, wherein
the SL HARQ-ACK information is received by the terminal device on a physical sidelink feedback channel PSFCH; or
the SL HARQ-ACK information is negative acknowledgement NACK information by default, and the terminal device receives no SL HARQ-ACK information on a PSFCH.

9. The method according to claim 1, wherein before determining the uplink channel/signal as the channel/signal with the higher priority, the method further comprises:
determining the uplink channel/signal as a PUCCH channel/signal carrying SL HARQ-ACK information; or
determining the uplink channel/signal as a channel/signal of a specified type.

10. The method according to any one of claims 7 to 9, wherein the uplink channel/signal of the specified type comprises at least one of the following:
an uplink physical random access channel PRACH channel/signal;
a physical uplink shared channel PUSCH scheduled by using a random access response RAR and a subsequently retransmitted channel/signal;
a PUSCH in a type-2 random access procedure and a subsequently retransmitted channel/signal;
a PUCCH channel/signal of a hybrid automatic repeat request-acknowledgement HARQ-ACK message corresponding to successive RARs; and
a PUCCH channel/signal scheduled by using downlink control information DCI.

11. The method according to any one of claims 1 to 6, wherein the determining the priority value of the uplink channel/signal comprises:
when the uplink channel/signal is a PUCCH channel/signal carrying SL-PRS ACK/NACK information, determining the priority value of the uplink channel/signal as:
a priority value of an SL-PRS corresponding to the ACK/NACK information;
a largest value among priority values configured for configured grant CG resources, wherein the configured grant resource is used to carry the sidelink signal; or
a largest value among priority values indicated by sidelink control information SCI carried by a PSCCH sent on a resource scheduled by using DCI, wherein the DCI is used to schedule the resource carrying the sidelink signal.

12. The method according to claim 11, wherein before determining the priority value of the uplink channel/signal as the largest value among the priority values configured for the configured grant CG resources or the largest value among the priority values indicated by the sidelink control information SCI carried by the PSCCH sent on the resource scheduled by using the DCI, the method further comprises:
determining that no SL-PRS or PSCCH is sent.

13. The method according to any one of claims 1 to 6, wherein the determining the priority value of the uplink channel/signal comprises:
when the uplink channel/signal comprises SL-PRS ACK/NACK information and SL HARQ-ACK information, and the SL-PRS ACK/NACK information and the SL HARQ-ACK information are carried on a PUCCH, using a larger one of a priority value of the SL-PRS ACK/NACK information and a priority value of the SL HARQ-ACK information as the priority value of the uplink channel/signal.

14. The method according to any one of claims 1 to 13, wherein obtaining the priority value of the sidelink channel/signal comprises:
obtaining a priority value indicated by SCI, wherein the SCI is used to schedule, in the dedicated resource pool, a resource carrying the sidelink signal; and
using, as the priority value of the sidelink channel/signal, the priority value indicated by the SCI.

15. The method according to any one of claims 1 to 14, wherein the sidelink channel/signal is carried in the dedicated resource pool.

16. The method according to any one of claims 1 to 15, wherein the uplink channel/signal and the sidelink channel/signal meet the following conditions:
transmission of the uplink channel/signal and transmission of the sidelink channel/signal overlap in time;
total power for transmission of the uplink channel/signal and transmission of the sidelink channel/signal is greater than total transmit power of the terminal device; or
transmission of the uplink channel/signal and transmission of the sidelink channel/signal overlap in time, and total power for transmission of the uplink channel/signal and transmission of the sidelink channel/signal is greater than total transmit power of the terminal device.

17. A communication apparatus, comprising at least one processor, wherein the at least one processor is configured to execute instructions stored in a memory, to cause the communication apparatus to perform the method according to any one of claims 1 to 16.

18. A communication apparatus, comprising a module or a unit configured to perform the method according to any one of claims 1 to 16.

19. A computer-readable storage medium, wherein the storage medium stores a computer program or instructions; and when the computer program or the instructions are run on a communication apparatus, the communication apparatus is caused to perform the method according to any one of claims 1 to 16.

20. A computer program product, wherein the computer program product comprises a computer program or instructions; and when the computer program or the instructions are executed by a communication apparatus, the method according to any one of claims 1 to 16 is implemented.
